# EUROPÄISCHE PATENTSCHRIFT

(11) **EP 2 541 220 B1**
(45) Veröffentlichungstag und Bekanntmachung des Hinweises auf die Patenterteilung: **08.04.2015**
(21) Anmeldenummer: 11171699.9
(22) Anmeldetag: 28.06.2011
(51) Int. Cl.: G01K 7/01

(54) **Vorrichtung zur Messung einer Temperatur eines Leistungshalbleiters**
Device for measuring a temperature of a high-power semiconductor
Dispositif de mesure d'une température d'un semi-conducteur de puissance

(43) Veröffentlichungstag der Anmeldung: 02.01.2013
(73) Patentinhaber: Fraunhofer-Gesellschaft zur Förderung der angewandten Forschung e.V., 80686 München (DE); ECPE Engineering Center for Power Electronics GmbH, 90443 Nürnberg (DE)
(72) Erfinder: Hoene, Eckart, 13465 Berlin (DE); Baumann, Thomas, 13125 Berlin (DE); Zeiter, Oleg, 10179 Berlin (DE)
(74) Vertreter: Stöckeler, Ferdinand

(56) Entgegenhaltungen:
- WO-A2-98/37581
- US-A1- 2009 167 414

## Beschreibung

Ausführungsbeispiele der vorliegenden Erfindung beziehen sich auf eine Vorrichtung zur Messung einer Temperatur eines Leistungshalbleiters. Weitere Ausführungsbeispiele der vorliegenden Erfindung beziehen sich auf eine Messung der Sperrschichttemperatur eines Leistungshalbleiters über die Temperaturabhängigkeit eines im Halbleiterchip integrierten Vorwiderstandes.

In der Veröffentlichung "Time Resolved In Situ Tᵥⱼ Measurements of 6.5kV IGBTs during Inverter Operation" von Waleri Berkel, Thomas Dueterneyer, Gunnar Puk und Oliver Schilling werden vier Verfahren zur Messung der Sperrschichttemperatur von 6,5 kV IGBT (IGBT = Insulated Gate Bipolar Transistor, dt. Bipolartransistor mit isolierter GateElektrode) während des Umrichterbetriebs miteinander verglichen, die im Folgenden kurz beschrieben werden.

Ein erstes der vier bekannten Verfahren bezieht sich auf die Verwendung einer IR-Kamera (IR = infrarot) zur Erfassung einer von der Oberfläche der IGBT emittierten elektromagnetischen Strahlung. Mit dem Planckschen Strahlungsgesetz kann aus der Intensität der emittierten elektromagnetischen Strahlung die Oberflächentemperatur der IGBT ermittelt werden. Hierzu ist es jedoch erforderlich, den Umrichter für die Messung zu öffnen und die Oberfläche der IGBT mit einem geeigneten Material zu beschichten. Die Oberflächentemperatur ist durch den thermischen Widerstand zwischen der Sperrschicht und der Oberfläche jedoch nur bedingt dazu geeignet, Aussagen hinsichtlich der Sperrschichttemperatur zu treffen.

Die Verwendung eines Thermoelements zur Messung der Sperrschichttemperatur des IGBT ist ein zweites der vier bekannten Verfahren. Das Thermoelement wird dabei auf die Oberfläche des IGBT geklebt. Hierbei ist es jedoch ebenfalls erforderlich, den Umrichter zu öffnen, wodurch eine Messung im eingebauten Zustand des Umrichters nicht möglich ist. Ferner liegt die Zeitkonstante von Thermoelementen im Bereich von 200 ms, so dass selbst Temperaturripple eines 20 Hz Laststromes nicht mehr aufgelöst werden können.

Auf der Verwendung eines IR-Sensors zur Ermittlung der Oberflächentemperatur des IGBT basiert ein drittes der vier bekannten Verfahren. Wie bei der IR-Kamera wird die temperaturabhängige Intensität der von der Oberfläche des IGBT emittierten elektromagnetischen Strahlung genutzt, um die Oberflächentemperatur des IGBT zu ermitteln. Bedingt durch die hohe Zeitkonstante von IR-Sensoren können jedoch, im Gegensatz zu IR-Kameras, keine Temperaturripple aufgelöst werden.

Ein viertes der vier bekannten Verfahren greift auf die Verwendung des internen Gatewiderstands des IGBT als Sensor zur Messung der Sperrschichttemperatur zurück. Um die Temperaturabhängigkeit des internen Gatewiderstands zu nutzen, wird ein konstanter Strom in den internen Gatewiderstand eingeprägt und ein Spannungsabfall über demselben gemessen. Dabei ist es jedoch erforderlich, den internen Aufbau des IGBT derart zu verändern, dass der interne Gatewiderstand von außen kontaktierbar ist. Um den internen Gatewiderstand von außen zu kontaktieren, ist es erforderlich, ein spezielles Substrat mit einem modifizierten Layout zu verwenden.

Die US 2009/167414 A1 beschreibt eine Schaltungsanordnung für die Messung der Temperatur in einem Halbleiterbauelement, das über eine Gateelektrode mittels eines Steuersignals geladen und entladen wird, wobei die Gateelektrode und der Steueranschluss über einen internen Gatewiderstand verbunden sind. Die Schaltungsanordnung umfasst dabei eine Messebrücke, eine Auswerteschaltung und ein Pulsgenerator, der ein Pulssignal zum teilweise Laden oder Entladen der Gateelektrode bereitstellt.
Die WO 98/37581 A2 beschreibt einen Leistungshalbleiter mit einer Temperatursensorschaltung. Die Temperatursensorschaltung weist temperatursensitive Elemente auf, von denen manche in der Nähe eines aktiven Bereichs des Leistungshalbleiters angeordnet sind und andere weiter entfernt von dem aktiven Bereich angeordnet sind.

Der vorliegenden Erfindung liegt somit die Aufgabe zugrunde, ein Konzept zu schaffen, welches ohne eine Modifikation des Leistungshalbleiters eine Messung der Temperatur des Leistungshalbleiters mit einer hohen Genauigkeit ermöglicht.

Diese Aufgabe wird durch eine Vorrichtung gemäß Anspruch 1 und ein Verfahren gemäß Anspruch 14 gelöst.

Ausführungsbeispiele der vorliegenden Erfindung schaffen eine Vorrichtung zur Messung einer Temperatur eines Leistungshalbleiters, mit einer Einrichtung zum Anlegen einer Wechselspannung an den Leistungshalbleiter und einer Einrichtung zur Messung einer Impedanz zwischen dem Steueranschluss des Leistungshalbleiters und dem Kanalanschluss des Leistungshalbleiters, wobei die Impedanz von einem in den Leistungshalbleiter integrierten temperaturabhängigen Steuerwiderstand abhängig ist.

Bei Ausführungsbeispielen wird an den Leistungshalbleiter eine Wechselspannung angelegt und die Impedanz zwischen dem Steueranschluss des Leistungshalbleiters und dem Kanalanschluss des Leistungshalbleiters gemessen. Diese Impedanz ist von dem in den Leistungshalbleiter integrierten temperaturabhängigen Steuerwiderstand abhängig, so dass sich eine Temperaturänderung des Leistungshalbleiters als eine Änderung der Impedanz zwischen dem Steueranschluss des Leistungshalbleiters und dem Kanalanschluss des Leistungshalbleiters äußert. Durch das erfindungsgemäße Anlegen einer Wechselspannung an den Leistungshalbleiter wird eine Messung der Impedanz ohne eine Modifikation des Leistungshalbleiters ermöglicht. Darüber hinaus kann die Impedanz in einem eingebauten Zustand des Leistungshalbleiters erfolgen, wodurch es z. B. möglich ist, die Temperatur des Leistungshalbleiters in einem Umrichter zu messen, ohne den Umrichter selbst zu öffnen. Ferner wird durch die Messung der Impedanz, die von dem in den Leistungshalbleiter integrierten temperaturabhängigen Steuerwiderstand abhängig ist, eine Messung der Temperatur des Leistungshalbleiters mit einer hohen Genauigkeit ermöglicht.

Ausführungsbeispiele der vorliegenden Erfindung werden Bezug nehmend auf die beiliegenden Zeichnungen näher erläutert. Es zeigen:
- Fig. 1: ein Blockschaltbild einer Vorrichtung zur Messung einer Temperatur eines Leistungshalbleiters gemäß einem Ausführungsbeispiel der vorliegenden Erfindung;
- Fig. 2: ein Blockschaltbild eines Leistungshalbleiters mit einem integrierten Steuerwiderstand;
- Fig. 3: ein Diagramm einer Impedanz zwischen einem Gateanschluss eines IGBT und einem Emitteranschluss des IGBT als Funktion der Frequenz einer an den IGBT angelegten Wechselspannung für 12 verschiedene Temperaturen; und
- Fig. 4: ein Blockschaltbild einer Vorrichtung zur Messung der Temperatur eines Leistungshalbleiters gemäß einem Ausführungsbeispiel der vorliegenden Erfindung.

In der nachfolgenden Beschreibung der Ausführungsbeispiele der Erfindung werden in den Figuren gleiche oder gleichwirkende Elemente mit den gleichen Bezugszeichen versehen, so dass deren Beschreibung in den unterschiedlichen Ausführungsbeispielen untereinander austauschbar ist.

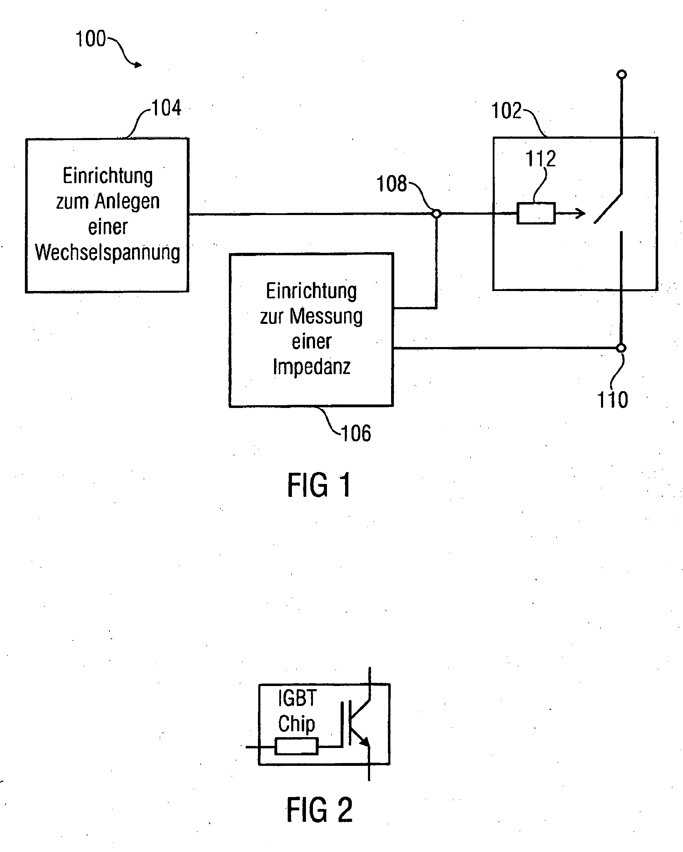

Fig. 1 zeigt ein Blockschaltbild einer Vorrichtung 100 zur Messung einer Temperatur eines Leistungshalbleiters 102 gemäß einem Ausführungsbeispiel der vorliegenden Erfindung. Die Vorrichtung 100 weist eine Einrichtung 104 zum Anlegen einer Wechselspannung an den Leistungshalbleiter 102 und eine Einrichtung 106 zur Messung einer Impedanz zwischen einem Steueranschluss 108 des Leistungshalbleiters 102 und einem Kanalanschluss 110 des Leistungshalbleiters 102 auf, wobei die Impedanz von einem in den Leistungshalbleiter 102 integrierten temperaturabhängigen Steuerwiderstand 112 abhängig ist.

Bei Ausführungsbeispielen wird an den Leistungshalbleiter 102 eine Wechselspannung angelegt und die Impedanz zwischen dem Steueranschluss 108 des Leistungshalbleiters 102 und dem Kanalanschluss 110 des Leistungshalbleiters 102 gemessen. Die Impedanz ist dabei von dem in den Leistungshalbleiter integrierten temperaturabhängigen Steuerwiderstand 112 abhängig. Eine Änderung der Temperatur des Leistungshalbleiters 102 äußert sich somit als eine Änderung der Impedanz zwischen dem Steueranschluss 108 des Leistungshalbleiters 102 und dem Kanalanschluss 110 des Leistungshalbleiters 102. Bei Ausführungsbeispielen weist der integrierte Steuerwiderstand 112 eine bekannte, z. B. material abhängige, Temperaturabhängigkeit auf, so dass dieser zur Ermittlung der Temperatur des Leistungshalbleiters 102 genutzt werden kann.

Die Einrichtung 106 zur Messung der Impedanz kann ferner ausgebildet sein, um basierend auf der Impedanz die Temperatur des Leistungshalbleiters 102 zu ermitteln. Dadurch, dass der Steuerwiderstand 112 in den Leistungshalbleiter 102 integriert ist, kann die Temperatur des Leistungshalbleiters 102 mit einer hohen Genauigkeit gemessen werden. Darüber hinaus ist der integrierte Steuerwiderstand 112 in der Regel in unmittelbarer Nähe zur Sperrschicht des Leistungshalbleiters 102 angeordnet, so dass eine sehr genaue Ermittlung der Sperrschichttemperatur des Leistungshalbleiters 102 ermöglicht wird.

Die Einrichtung 104 zum Anlegen der Wechselspannung kann ausgebildet sein, um die Wechselspannung zwischen dem Steueranschluss 108 des Leistungshalbleiters 102 und dem Kanalanschluss 110 des Leistungshalbleiters 102 anzulegen.

Der Leistungshalbleiter 102 kann zwischen dem Steueranschluss 108 und dem Kanalanschluss 110 parasitäre Kapazitäten und/oder Induktivitäten aufweisen. Ferner können die Einrichtung 104 zum Anlegen der Wechselspannung und die Einrichtung 106 zur Messung der Impedanz über Zuleitungen, die ebenfalls Induktivitäten aufweisen, mit dem Leistungshalbleiter 102 gekoppelt bzw. verbunden sein.

Die Einrichtung 106 zur Messung der Impedanz kann daher ausgebildet sein, um basierend auf einem Realteil der Impedanz die Temperatur des Leistungshalbleiters 102 zu ermitteln.

Um die kapazitiven und/oder induktiven Anteile der Messung zu reduzieren, kann die Einrichtung 104 zum Anlegen der Wechselspannung ausgebildet sein, um eine Frequenz der Wechselspannung derart zu wählen, dass die kapazitiven und/oder induktiven Anteile der Messung reduziert sind. Beispielsweise kann die Einrichtung 104 zum Anlegen der Wechselspannung ausgebildet sein, um die Frequenz der Wechselspannung derart zu wählen, dass die Frequenz in einem Bereich einer Resonanzfrequenz liegt, die durch die kapazitiven und/oder induktiven Anteile definiert wird. Dabei können die kapazitiven Anteile Kapazitäten des Leistungshalbleiters 102 umfassen, und die induktiven Anteile Induktivitäten des Leistungshalbleiters 102 umfassen. Ferner können die kapazitiven Anteile Kapazitäten der Einrichtung 104 zum Anlegen der Wechselspannung und/oder der Einrichtung 106 zur Messung der Impedanz, und die induktiven Anteile Induktivitäten der Einrichtung 104 zum Anlegen der Wechselspannung und/oder der Einrichtung 106 zur Messung der Impedanz umfassen.

Bei Ausführungsbeispielen kann der Leistungshalbleiter 102 ein Bipolartransistor 102 oder ein IGBT 102 sein, wobei im Falle des IGBT 102 der Steuerwiderstand 112 ein Gatewiderstand 112, der Steueranschluss 108 ein Gateanschluss 108 und der Kanalanschluss 110 ein Emitteranschluss 110 ist. In Leistungshalbleitern 102 (vor allem in IGBT) werden Gatewiderstände 112 (bzw. Gatevorwiderstande) integriert, die eine Temperaturabhängigkeit aufweisen.

Ausführungsbeispiele der vorliegenden Erfindung beschreiben eine Methode, mit der der Gatewiderstand 112 gemessen und damit die Temperatur des Leistungshalbleiters 102 ermittelt werden kann, ohne den handelsüblichen Aufbau des Leistungshalbleiters 102 modifizieren zu müssen. Die Messung kann im normalen Betrieb des Leistungshalbleiters 102 erfolgen. Erfindungsgemäß wird eine sinusförmige Wechselspannung zwischen dem Gateanschluss 108 und dem Emitteranschluss 110 eingespeist, deren Frequenz so gewählt ist, dass eine Gatekapazität und Zuleitungsinduktivitäten in Resonanz kommen und sich deren Impedanzen eliminieren.

Im folgenden wird ein Ausführungsbeispiel der vorliegenden Erfindung beschrieben, bei dem der Leistungshalbleiter 102, wie in Fig. 2 gezeigt, ein IGBT 102 ist. Die folgende Beschreibung ist jedoch auch auf andere Leistungshalbleiter 102, die einen integrierten temperaturabhängigen Steuerwiderstand 112 aufweisen, anwendbar.

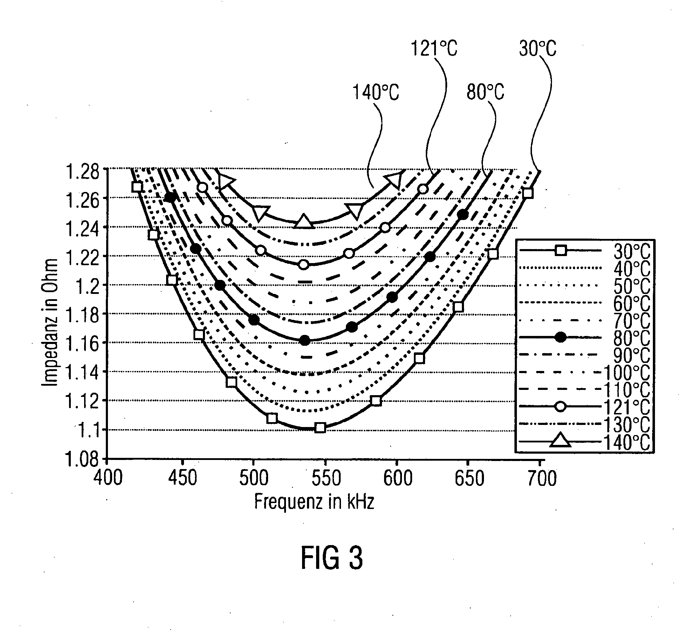

Fig. 3 zeigt beispielhaft ein Diagramm einer Impedanz zwischen einem Gateanschluss 108 eines IGBT 102 und einem Emitteranschluss 110 des IGBT 102 als Funktion der Frequenz einer an den IGBT 102 angelegten Wechselspannung für 12 verschiedene Temperaturen von 30° C bis 140° C. Dabei beschreibt die Ordinate die Impedanz in Ohm und die Abszisse die Frequenz in kHz.

In Fig. 3 ist zu erkennen, dass die Impedanz zwischen dem Gateanschluss 108 des IGBT 102 und dem Emitteranschluss 110 des IGBT 102 mit zunehmender Temperatur steigt. Dies ist auf die Temperaturabhängigkeit des integrierten Gatewiderstands 112 zurückzuführen. Ferner ist in Fig. 3 beispielhaft zu erkennen, dass die Impedanz ein Minimum bei ca. 540 kHz aufweist, was der Resonanzfrequenz entspricht, die durch die kapazitiven und/oder induktiven Anteile definiert wird. In dem Impedanzminimum ist der Betrag der Impedanz somit gleich dem zu messenden Gatewiderstand 112 plus den Zuleitungswiderständen. Über die Messung der Stromhöhe kann die Impedanz bestimmt werden, die proportional zur Temperatur ist. Damit ist die gewünschte Größe, die Sperrschichttemperatur, ermittelt. Gemäß der vorliegenden Erfindung wird somit die Wechselspannung zur Messung des Gatewiderstands 112 genutzt.

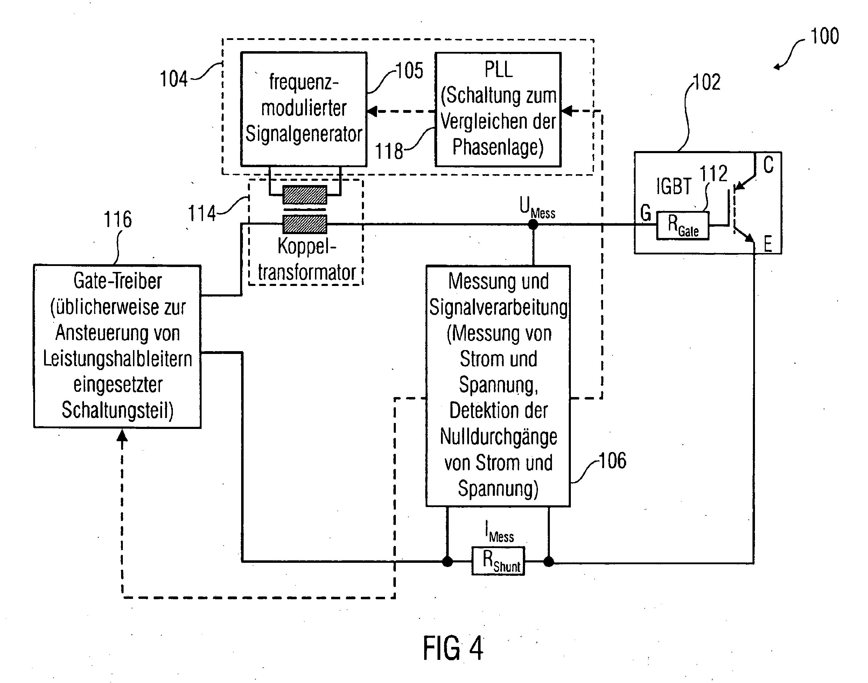

Fig. 4 zeigt ein Blockschaltbild einer Vorrichtung 100 zur Messung der Temperatur eines Leistungshalbleiters 102 gemäß einem Ausführungsbeispiel der vorliegenden Erfindung. Die Vorrichtung 100 weist eine Einrichtung 104 zum Anlegen einer Wechselspannung an den Leistungshalbleiter 102 und eine Einrichtung 106 zur Messung einer Impedanz zwischen einem Steueranschluss 108 des Leistungshalbleiters 102 und einem Kanalanschluss 110 des Leistungshalbleiters 102 auf, wobei die Impedanz von einem in den Leistungshalbleiter 102 integrierten temperaturabhängigen Steuerwiderstand 112 abhängig ist.

In Fig. 4 ist der Leistungshalbleiter 102 beispielhaft ein IGBT 102, wobei der Steueranschluss 108 ein Gateanschluss 108 und der Kanalanschluss 110 ein Emitteranschluss 110 ist. Die Erfindung ist aber nicht auf solche Ausführungsbeispiele beschränkt, sondern vielmehr kann der Leistungshalbleiter 102 ein beliebiger Leistungshalbleiter 102 sein, der einen integrierten temperaturabhängigen Steuerwiderstand 112 aufweist.

Bei Ausführungsbeispielen kann die Einrichtung 104 zum Anlegen der Wechselspannung einen frequenzmodulierten Signalgenerator 105 aufweisen, der ausgebildet ist, um die Wechselspannung zu erzeugen. Ferner kann die Einrichtung 104 zum Anlegen der Wechselspannung ausgebildet sein, um die Wechselspannung zwischen dem Steueranschluss 108 des Leistungshalbleiters 102 und dem Kanalanschluss 110 des Leistungshalbleiters 102 anzulegen. Dabei kann die Einrichtung 104 zum Anlegen der Wechselspannung über eine Potentialebenenänderungsschaltung 114 mit dem Steueranschluss 108 des Leistungshalbleiters 102 und dem Kanalanschluss 110 des Leistungshalbleiters 102 gekoppelt sein. Die Potentialebenenänderungsschaltung kann vom induktiven Kopplungstyp, wie z.B. vom Transformatorkopplungstyp, sein.

Zur Ermittlung der Impedanz zwischen dem Steueranschluss 108 des Leistungshalbleiters 102 und dem Kanalanschluss 110 des Leistungshalbleiters 102 kann die Einrichtung zur Messung der Impedanz ebenfalls mit dem Steueranschluss 108 des Leistungshalbleiters 102 und dem Kanalanschluss 110 des Leistungshalbleiters 102 gekoppelt sein, wobei die Einrichtung 106 zur Messung der Impedanz ausgebildet sein kann, um basierend auf einer Spannungsmessung einer Spannung zwischen dem Steueranschluss 108 des Leistungshalbleiters 102 und dem Kanalanschluss 110 des Leistungshalbleiters 102 und einer Strommessung eines Stromes, der durch die Impedanz zwischen dem Steueranschluss 108 des Leistungshalbleiters 102 und dem Kanalanschluss 110 des Leistungshalbleiters 102 fließt, die Impedanz zwischen dem Steueranschluss 108 des Leistungshalbleiters 102 und dem Kanalanschluss 110 des Leistungshalbleiters 102 zu messen. Zur Messung des Stromes kann die Einrichtung 106 zur Messung der Impedanz einen Messwiderstand R_{Shunt} aufweisen und ausgebildet sein, um den Spannungsabfall über den bekannten Messwiderstand R_{Shunt} zu messen, der proportional zu dem Strom ist, der durch den integrierten temperaturabhängigen Steuerwiderstand 112 fließt.

Die Einrichtung 104 zum Anlegen der Wechselspannung kann ferner ausgebildet sein, um basierend auf der Spannung und dem Strom die Frequenz der Wechselspannung derart zu wählen, dass kapazitive und/oder induktive Anteile der Messung reduziert sind. Beispielsweise kann die Einrichtung 104 zum Anlegen der Wechselspannung ausgebildet sein, um eine Phasendifferenz zwischen dem Strom und der Spannung zu ermitteln, und um basierend auf der Phasendifferenz die Frequenz der Wechselspannung derart zu wählen, dass die Phasendifferenz zwischen der Spannung und dem Strom reduziert ist. Wenn die Phasendifferenz zwischen der Spannung und dem Strom gleich Null ist, dann entsprich die Frequenz der Wechselspannung der Resonanzfrequenz, die die durch die kapazitiven und/oder induktiven Anteile definiert wird. Bei der Resonanzfrequenz heben sich die kapazitiven und induktiven Anteile der Impedanz gegenseitig auf, so dass die Impedanz dem temperaturabhängigen Steuerwiderstand 112 plus den Zuleitungswiderständen entspricht.

Zur Reduzierung der Phasendifferenz zwischen dem Strom und der Spannung kann die Einrichtung 104 zum Anlegen der Wechselspannung eine Vergleichseinrichtung 118 aufweisen, die ausgebildet ist, um eine Phaseninformation bereitzustellen, die eine Phasendifferenz zwischen der Spannung und dem Strom beschreibt, wobei die Einrichtung 104 zum Anlegen der Wechselspannung ausgebildet ist, um die Frequenz der Wechselspannung basierend auf der Phaseninformation zu wählen. Die Vergleichseinrichtung kann z. B. eine PLL (PLL = Phase Locked Loop, dt. Phasenregelschleife) sein. Mit der PLL kann das Impedanzminimum detektiert werden, da bei dieser Frequenz Strom und Spannung des hochfrequenten Signals in Phase sind.

In Umrichtern wird der Leistungshalbleiter 102 in der Regel von der Steuerspannung einer Treiberschaltung 116 angesteuert, wobei sich der Leistungshalbleiter 102 in Abhängigkeit von der an dem Steueranschluss 108 des Leistungshalbleiters 102 angelegten Steuerspannung entweder im eingeschalteten oder im ausgeschaltetem Zustand befindet.

Um eine genaue Messung der Impedanz zwischen dem Steueranschluss 108 des Leistungshalbleiters 102 und dem Kanalanschluss 110 des Leistungshalbleiters 102 zu ermöglichen, ist es von Vorteil, wenn sich der Leistungshalbleiter 102 in einem stationären Zustand befindet. Der stationäre Zustand kann dabei z.B. ein eingeschwungener eingeschalteter Zustand sein. Die Einrichtung 106 zur Messung der Impedanz kann daher ausgebildet sein, um einen Zeitabschnitt zu ermitteln, in dem sich der Leistungshalbleiter 102 in einem stationären Zustand befindet, und um die Impedanz während dem Zeitabschnitt zu messen, während dem sich der Leistungshalbleiter 102 in dem stationären Zustand befindet. Der stationäre Zustand kann basierend auf der Spannung und/oder dem Strom ermittelt werden.

Die Schaltfrequenz des Leistungshalbleiters 102 liegt in der Regel im Bereich von einigen 10 Hz bis einigen 10 kHz, während die Resonanzfrequenz, die durch die kapazitiven und/oder induktiven Anteile definiert wird, im Bereich von einigen 100 kHz liegt. Somit kann der Zeitabschnitt zwischen zwei aufeinanderfolgenden Schaltvorgängen, in dem sich der Leistungshalbleiter 102 in einem quasi stationären Zustand befindet, genutzt werden, um die Impedanz des integrierten temperaturabhängigen Steuerwiderstands 112 zu messen und die Temperatur des Leistungshalbleiters 102 zu ermitteln.

Ferner kann die Einrichtung 106 zur Messung der Impedanz ausgebildet sein, um eine Schaltinformation der Treiberschaltung 116 zu erhalten, und um basierend auf der Schaltinformation der Treiberschaltung 116 den Zeitabschnitt zu ermitteln, während dem sich der Leistungshalbleiter 102 in dem stationären Zustand befindet. Die Schaltinformation kann beispielsweise ein an der Treiberschaltung 116 anliegendes binäres Steuersignal bzw. Ansteuersignal sein, basierend auf dem die Treiberschaltung 116 die Steuerspannung für den Leistungshalbleiter 102 bereitstellt.

Darüber hinaus kann die Einrichtung 104 zum Anlegen der Wechselspannung ausgebildet sein, um eine Information zu erhalten, die den Zeitabschnitt beschreibt, während dem sich der Leistungshalbleiter 102 in dem stationären Zustand befindet, und um die Wechselspannung basierend auf der Information während dem Zeitabschnitt an den Leistungshalbleiter 102 anzulegen, während dem sich der Leistungshalbleiter 102 in dem stationären Zustand befindet. Hierdurch kann sichergestellt werden, dass die Wechselspannung nicht während des Ein- bzw. Ausschaltvorgangs an den Leistungshalbleiter 102 angelegt wird.

Des Weiteren können bei Ausführungsbeispielen basierend auf der Messung der Temperatur Rückschlüsse auf den physikalischen Zustand, z. B. Alterungszustand, des Leistungshalbleiters 102 geschlossen werden. Beispielsweise weist der Leistungshalbleiter 102 eine höhere Temperatur bei gleicher Verlustleistung auf, wenn sich Risse in der Lotschicht gebildet haben.

Weitere Ausführungsbeispiele der vorliegenden Erfindung beziehen sich auf ein Verfahren zur Messung einer Temperatur eines Leistungshalbleiters. In einem ersten Schritt wird eine Wechselspannung an den Leistungshalbleiter angelegt. In einem zweiten Schritt, wird eine Impedanz zwischen dem Steueranschluss des Leistungshalbleiters und dem Kanalanschluss des Leistungshalbleiters gemessen, wobei die Impedanz von einem in dem Leistungshalbleiter integrierten temperaturabhängigen Steuerwiderstand abhängig ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (100) zur Messung einer Temperatur eines Leistungshalbleiters (102), mit folgenden Merkmalen:
einer Einrichtung (104) zum Anlegen einer Wechselspannung an den Leistungshalbleiter (102); und
einer Einrichtung (106) zur Messung einer Impedanz zwischen dem Steueranschluss (108) des Leistungshalbleiters (102) und dem Kanalanschluss (110) des Leistungshalbleiters (102), wobei die Impedanz von einem in den Leistungshalbleiter (102) integrierten temperaturabhängigen Steuerwiderstand (112) abhängig ist;
wobei die Einrichtung (104) zum Anlegen der Wechselspannung ausgebildet ist, um eine Frequenz der Wechselspannung derart zu wählen, dass kapazitive und/oder induktive Anteile der Messung reduziert sind, und dass die Frequenz in einem Bereich einer Resonanzfrequenz liegt, die durch die kapazitiven und/oder induktiven Anteile definiert wird.

2. Vorrichtung (100) nach Anspruch 1, wobei die kapazitiven Anteile Kapazitäten des Leistungshalbleiters (102) umfassen, und wobei die induktiven Anteile Induktivitäten des Leistungshalbleiters (102) umfassen.

3. Vorrichtung (100) nach einem der Ansprüche 1 oder 2, wobei die kapazitiven Anteile Kapazitäten der Einrichtung (104) zum Anlegen der Wechselspannung und/oder der Einrichtung (106) zur Messung der Impedanz umfassen, und wobei die induktiven Anteile Induktivitäten der Einrichtung (104) zum Anlegen der Wechselspannung und/oder der Einrichtung (106) zur Messung der Impedanz umfassen.

4. Vorrichtung (100) nach einem der Ansprüche 1 bis 3, wobei die Einrichtung (104) zum Anlegen der Wechselspannung ausgebildet ist, um die Wechselspannung zwischen dem Steueranschluss (108) des Leistungshalbleiters (102) und dem Kanalanschluss (110) des Leistungshalbleiters (102) anzulegen.

5. Vorrichtung (100) nach Anspruch 4, wobei die Einrichtung (104) zum Anlegen der Wechselspannung über eine Potentialebenenänderungsschaltung (114) mit dem Steueranschluss (108) des Leistungshalbleiters (102) und dem Kanalanschluss (110) des Leistungshalbleiters (102) gekoppelt ist.

6. Vorrichtung (100) nach einem der Ansprüche 1 bis 5, wobei die Einrichtung (106) zur Messung der Impedanz ausgebildet ist, um basierend auf der Impedanz die Temperatur des Leistungshalbleiters (102) zu ermitteln.

7. Vorrichtung (100) nach Anspruch 6, wobei die Einrichtung zur Messung (106) der Impedanz ausgebildet ist, um basierend auf einem Realteil der Impedanz die Temperatur des Leistungshalbleiters (102) zu ermitteln.

8. Vorrichtung (100) nach einem der Ansprüche 1 bis 7, wobei die Einrichtung (106) zur Messung der Impedanz ausgebildet ist, um basierend auf einer Spannungsmessung einer Spannung zwischen dem Steueranschluss (108) des Leistungshalbleiters (102) und dem Kanalanschluss (110) des Leistungshalbleiters (102) und einer Strommessung eines Stromes, der durch die Impedanz zwischen dem Steueranschluss (108) des Leistungshalbleiters (102) und dem Kanalanschluss (110) des Leistungshalbleiters (102) fließt, die Impedanz zwischen dem Steueranschluss (108) des Leistungshalbleiters (102) und dem Kanalanschluss (110) des Leistungshalbleiters (102) zu messen.

9. Vorrichtung (100) nach Anspruch 8, wobei die Einrichtung (104) zum Anlegen der Wechselspannung ausgebildet ist, um basierend auf der Spannung und dem Strom die Frequenz der Wechselspannung derart zu wählen, dass kapazitive und/oder induktive Anteile der Messung reduziert sind.

10. Vorrichtung (100) nach Anspruch 8 oder 9, wobei die Einrichtung (104) zum Anlegen der Wechselspannung eine Vergleichseinrichtung aufweist, die ausgebildet ist, um eine Phaseninformation bereitzustellen, die eine Phasendifferenz zwischen der Spannung und dem Strom beschreibt, wobei die Einrichtung (104) zum Anlegen der Wechselspannung ausgebildet ist, um die Frequenz der Wechselspannung basierend auf der Phaseninformation zu wählen.

11. Vorrichtung (100) nach einem der Ansprüche 1 bis 10, wobei die Einrichtung (106) zur Messung der Impedanz ausgebildet ist, um einen Zeitabschnitt zu ermitteln, während dem sich der Leistungshalbleiter (102) in einem stationären Zustand befindet, und um die Impedanz während dem Zeitabschnitt zu messen.

12. Vorrichtung (100) nach Anspruch 11, wobei die Einrichtung (106) zur Messung der Impedanz ausgebildet ist, um ein Schaltinformation einer Treiberschaltung (116) des Leistungshalbleiters (102) zu erhalten, und um basierend auf der Schaltinformation der Treiberschaltung (116) den Zeitabschnitt zu ermitteln, während dem sich der Leistungshalbleiter (102) in dem stationären Zustand befindet.

13. Vorrichtung (100) nach Anspruch 11 oder 12, wobei die Einrichtung (104) zum Anlegen der Wechselspannung ausgebildet ist, um eine Information zu erhalten, die den Zeitabschnitt beschreibt, während dem sich der Leistungshalbleiter (102) in dem stationären Zustand befindet, und um die Wechselspannung basierend auf der Information während dem Zeitabschnitt an den Leistungshalbleiter (102) anzulegen.

14. Verfahren zur Messung einer Temperatur eines Leistungshalbleiters, mit folgenden Schritten:
Anlegen einer Wechselspannung an den Leistungshalbleiter; und
Messen einer Impedanz zwischen dem Steueranschluss des Leistungshalbleiters und dem Kanalanschluss des Leistungshalbleiters, wobei die Impedanz von einem in dem Leistungshalbleiter integrierten temperaturabhängigen Steuerwiderstand abhängig ist;
wobei bei dem Messen der Impedanz eine Frequenz der Wechselspannung derart gewählt wird, dass kapazitive und/oder induktive Anteile der Messung reduziert sind, und dass die Frequenz in einem Bereich einer Resonanzfrequenz liegt, die durch die kapazitiven und/oder induktiven Anteile definiert wird.

15. Verfahren nach Anspruch 14, ferner mit folgendem Schritt:
Ermittlung eines physikalischen Zustands des Leistungshalbleiters basierend auf der Messung der Temperatur.

## Claims

1. A device (100) for measuring a temperature of a power semiconductor (102), comprising:
means (104) for applying an alternating voltage to the power semiconductor (102); and
means (106) for measuring an impedance between the control terminal (108) of the power semiconductor (102) and the channel terminal (110) of the power semiconductor (102), the impedance being dependent on a temperature-dependent control resistor (112) integrated in the power semiconductor (102);
wherein the means (104) for applying the alternating voltage is configured to select a frequency of the alternating voltage such that capacitive and/or inductive portions of the measurement are reduced, and such that the frequency is in a range of a resonant frequency defined by the capacitive and/or inductive portions.

2. The device (100) in accordance with claim 1, wherein the capacitive portions include capacities of the power semiconductor (102), and wherein the inductive portions include inductivities of the power semiconductor (102).

3. The device (100) in accordance with one of claims 1 or 2, wherein the capacitive portions include capacities of the means (104) for applying the alternating voltage and/or the means (106) for measuring the impedance, and wherein the inductive portions include inductivities of the means (104) for applying the alternating voltage and/or the means (106) for measuring the impedance.

4. The device (100) in accordance with one of claims 1 to 3, wherein the means (104) for applying the alternating voltage is configured to apply the alternating voltage between the control terminal (108) of the power semiconductor (102) and the channel terminal (110) of the power semiconductor (102).

5. The device (100) in accordance with claim 4, wherein the means (104) for applying the alternating voltage is coupled to the control terminal (108) of the power semiconductor (102) and the channel terminal (110) of the power semiconductor (102) via a potential level changing circuit (114).

6. The device (100) in accordance with one of claims 1 to 5, wherein the means (106) for measuring the impedance is configured to determine the temperature of the power semiconductor (102) based on the impedance.

7. The device (100) in accordance with claim 6, wherein the means for measuring (106) the impedance is configured to determine the temperature of the power semiconductor (102) based on a real part of the impedance.

8. The device (100) in accordance with one of claims 1 to 7, wherein the means (106) for measuring the impedance is configured to measure the impedance between the control terminal (108) of the power semiconductor (102) and the channel terminal (110) of the power semiconductor (102) based on a voltage measurement of a voltage between the control terminal (108) of the power semiconductor (102) and the channel terminal (110) of the power semiconductor (102) and a current measurement of a current flowing through the impedance between the control terminal (108) of the power semiconductor (102) and the channel terminal (110) of the power semiconductor (102).

9. The device (100) in accordance with claim 8, wherein the means (104) for applying the alternating voltage is configured to select, based on the voltage and the current, the frequency of the alternating voltage such that capacitive and/or inductive portions of the measurement are reduced.

10. The device (100) in accordance with claim 8 or 9, wherein the means (104) for applying the alternating voltage comprises comparing means configured to provide phase information describing a phase difference between the voltage and the current, the means (104) for applying the alternating voltage being configured to select the frequency of the alternating voltage based on the phase information.

11. The device (100) in accordance with one of claims 1 to 10, wherein the means (106) for measuring the impedance is configured to determine a period of time during which the power semiconductor (102) is in a stationary state, and measure the impedance during the period of time.

12. The device (100) in accordance with claim 11, wherein the means (106) for measuring the impedance is configured to acquire switching information of a driver circuit (116) of the power semiconductor (102), and to determine, based on the switching information of the driver circuit (116), the period of time during which the power semiconductor (102) is in the stationary state.

13. The device (100) in accordance with claim 11 or 12, wherein the means (104) for applying the alternating voltage is configured to acquire information describing the period of time during which the power semiconductor (102) is in the stationary state, and to apply the alternating voltage to the power semiconductor (102), based on the information, during the period of time.

14. A method of measuring a temperature of a power semiconductor, comprising:
applying an alternating voltage to the power semiconductor; and
measuring an impedance between the control terminal of the power semiconductor and the channel terminal of the power semiconductor, the impedance being dependent on a temperature-dependent control resistor integrated in the power semiconductor;
wherein, when measuring the impedance, a frequency of the alternating voltage is selected such that capacitive and/or inductive portions of the measurement are reduced, and such that the frequency is in a range of a resonant frequency which is defined by the capacitive and/or inductive portions.

15. The method in accordance with claim 14, further comprising:
determining a physical state of the power semiconductor based on the measurement of the temperature.

## Revendications

1. Dispositif (100) de mesure d'une température d'un semi-conducteur de puissance (102), aux caractéristiques suivantes:
un moyen (104) destiné à appliquer une tension alternative au semi-conducteur de puissance (102); et
un moyen (106) destiné à mesurer une impédance entre la borne de commande (108) du semi-conducteur de puissance (102) et la borne de canal (110) du semi-conducteur de puissance (102), l'impédance étant fonction d'une résistance de commande (112) fonction de la température intégrée dans le semi-conducteur de puissance (102);
dans lequel le moyen (104) pour appliquer la tension alternative est réalisé pour sélectionner une fréquence de la tension alternative de sorte que les parts capacitives et/ou inductives de la mesure soient réduits, et que la fréquence se situe dans une plage d'une fréquence de résonance qui est définie par les parts capacitives et/ou inductives.

2. Dispositif (100) selon la revendication 1, dans lequel les parts capacitives comprennent les capacités du semi-conducteur de puissance (102), et dans lequel les parts inductives comprennent les inductances du semi-conducteur de puissance (102).

3. Dispositif (100) selon l'une des revendications 1 ou 2, dans lequel les parts capacitives comprennent les capacités du moyen (104) destiné à appliquer la tension alternative et/ou du moyen (106) destiné à mesurer l'impédance, et dans lequel les parts inductives comprennent les inductances du moyen (104) destiné à appliquer la tension alternative et/ou du moyen (106) destiné à mesurer l'impédance.

4. Dispositif (100 selon l'une des revendications 1 à 3, dans lequel le moyen (104) destiné à appliquer la tension alternative est conçu pour appliquer la tension alternative entre la borne de commande (108) du semi-conducteur de puissance (102) et la borne de canal (110) du semi-conducteur de puissance (102).

5. Dispositif (100) selon la revendication 4, dans lequel le moyen (104) destiné à appliquer la tension alternative est couplé par l'intermédiaire d'un circuit de changement de niveau de potentiel (114) à la borne de commande (108) du semi-conducteur de puissance (102) et à la borne de canal (110) du semi-conducteur de puissance (102).

6. Dispositif (100) selon l'une des revendications 1 à 5, dans lequel le moyen (106) destiné à mesurer l'impédance est réalisé pour déterminer, sur base de l'impédance, la température du semi-conducteur de puissance (102).

7. Dispositif (100) selon la revendication 6, dans lequel le moyen destiné à mesurer (106) l'impédance est réalisé pour déterminer, sur base d'une part réelle de l'impédance, la température du semi-conducteur de puissance (102).

8. Dispositif (100) selon l'une des revendications 1 à 7, dans lequel le moyen (106) destiné à mesurer l'impédance est réalisé pour mesurer, sur base d'une mesure d'une tension entre la borne de commande (108) du semi-conducteur de puissance (102) et la borne de canal (110) du semi-conducteur de puissance (102) et d'une mesure d'un courant circulant dans l'impédance entre la borne de commande (108) du semi-conducteur de puissance (102) et la borne de canal (110) du semi-conducteur de puissance (102), l'impédance entre la borne de commande (108) du semi-conducteur de puissance (102) et la borne de canal (110) du semi-conducteur de puissance (102).

9. Dispositif (100) selon la revendication 8, dans lequel le moyen (104) destiné à appliquer la tension alternative est réalisé pour sélectionner, sur base de la tension et du courant, la fréquence de la tension alternative de sorte que soient réduites les parts capacitives et/ou inductives de la mesure.

10. Dispositif (100) selon la revendication 8 ou 9, dans lequel le moyen (104) destiné à appliquer la tension alternative présente un moyen de comparaison qui est conçu pour fournir une information de phase qui décrit une différence de phase entre la tension et le courant, dans lequel le moyen (104) pour appliquer la tension alternative est conçu pour sélectionner la fréquence de la tension alternative sur base de l'information de phase.

11. Dispositif (100) selon l'une des revendications 1 à 10, dans lequel le moyen (106) destiné à mesurer l'impédance est conçu pour déterminer un segment de temps pendant lequel le semi-conducteur de puissance (102) se trouve dans un état stationnaire, et pour mesurer l'impédance pendant le segment de temps.

12. Dispositif (100) selon la revendication 11, dans lequel le moyen (106) destiné à mesurer l'impédance est conçu pour obtenir une information de commutation d'un circuit de commande (116) du semi-conducteur de puissance (102), et pour déterminer, sur base de l'information de commutation du circuit de commande (116), le segment de temps pendant lequel le semi-conducteur de puissance (102) se trouve à l'état stationnaire.

13. Dispositif (100) selon la revendication 11 ou 12, dans lequel le moyen (104) destiné à appliquer la tension alternative est conçu pour obtenir une information qui décrit le segment de temps pendant lequel le semi-conducteur de puissance (102) se situe à l'état stationnaire, et pour appliquer la tension alternative, sur base de l'information, pendant le segment de temps du semi-conducteur de puissance (102).

14. Procédé de mesure d'une température d'un semi-conducteur de puissance, aux étapes suivantes consistant à:
appliquer une tension alternative au semi-conducteur de puissance; et
mesurer une impédance entre la borne de commande du semi-conducteur de puissance et la borne de canal du semi-conducteur de puissance, l'impédance étant fonction d'une résistance de commande fonction de la température intégrée dans le semi-conducteur de puissance;
dans lequel, lors de la mesure de l'impédance, une fréquence de la tension alternative est choisie de sorte que les parts capacitives et/ou inductives de la mesure soient réduites, et que la fréquence se situe dans une plage d'une fréquence de résonance qui est définie par les parts capacitives et/ou inductives.

15. Procédé selon la revendication 14, par ailleurs à l'étape suivante consistant à:
déterminer un état physique du semi-conducteur de puissance sur base de la mesure de la température.
